# EUROPÄISCHE PATENTSCHRIFT

(11) **EP 2 430 764 B1**
(45) Veröffentlichungstag und Bekanntmachung des Hinweises auf die Patenterteilung: **11.07.2018**
(21) Anmeldenummer: 10718966.4
(22) Anmeldetag: 05.05.2010
(51) Int. Cl.: H04B 1/38, G07C 9/00, G08G 1/16

(54) **FAHRZEUG-ZU-X-KOMMUNIKATION ÜBER FUNKSCHLÜSSEL**
VEHICLE-TO-X COMMUNICATION VIA A REMOTE KEYLESS ENTRY SYSTEM
COMMUNICATION ENTRE VÉHICULE ET X PAR CLÉ RADIO

(30) Priorität: 11.05.2009 DE 102009003009
(43) Veröffentlichungstag der Anmeldung: 21.03.2012
(73) Patentinhaber: Continental Teves AG & Co. oHG, 60488 Frankfurt (DE); Continental Automotive GmbH, 30165 Hannover (DE)
(72) Erfinder: STÄHLIN, Ulrich, 65670 Eschborn (DE); BREYER, Lutz-Peter, 85622 Feldkirchen (DE); AUNKOFER, Markus, 93326 Abensberg (DE); SÄGER, Peter, 61381 Friedrichrichsdorf (DE)
(74) Vertreter: Bonn, Roman Klemens
(86) Internationale Anmeldenummer: PCT/EP2010/056108
(87) Internationale Veröffentlichungsnummer: WO 2010/130612

(56) Entgegenhaltungen:
- EP-A1- 1 216 890
- WO-A1-2009/074655
- DE-A1-102009 045 816
- US-A- 5 635 923
- "Car 2 Car Communication Consortium Manifesto" Car 2 Car org 28. August 2007 (2007-08-28), XP002593958 Gefunden im Internet: URL:http://www.car-to-car.org [gefunden am 2010-07-08]

## Beschreibung

### Gebiet der Erfindung

Die Erfindung betrifft eine Kommunikationsvorrichtung zur Funkschlüssel-Fahrzeug-zu-X-Kommunikation für ein Fahrzeug, ein Fahrzeug mit einer Kommunikationsvorrichtung, ein Verfahren zur Funkschlüssel-Fahrzeug-zu-X-Kommunikation, ein Programmelement und ein computerlesbares Medium.

### Technologischer Hintergrund

Moderne Fahrzeuge sind häufig mit schlüssellosen Zugangssystemen bzw. Funkschlüsseln, dem sog. Remote Keyless Entry (RKE) ausgestattet. Diese Funkschlüssel steuern das Ver- und Entriegeln von Türen und Kofferraum eines Kraftfahrzeuges per Funksteuerung. Auf diese Weise können die Fahrzeugtürschlosse eines Kraftfahrzeuges drahtlos geöffnet bzw. geschlossen werden. Weitere Funktionen können über einen Funkschlüssel aktiviert bzw. deaktiviert werden, wie beispielsweise die Wegfahrsperre.

Ein Funkschlüsselsystem umfasst einen fahrzeugseitigen Empfänger bzw. ein Fahrzeugmodul und einen oder mehrere mobile Sender, die beispielsweise in der Hand gehalten werden können. Der Sender bzw. das tragbare Modul kann dabei mit einem oder mehreren manuell bedienbaren Schaltern versehen sein. Weiterhin gibt es Funkschlüssel neuerer Generationen, bei denen der Funkschlüssel nicht mehr in die Hand genommen wird, sondern der fahrzeugseitige Sender die Nähe des Schlüssels zum Fahrzeug registriert und beispielsweise durch eine Berührung des Türgriffes durch den Fahrer das Türschloss entriegelt. Der Verzicht von manuellen Eingaben über den Funkschlüsselsender wird möglich durch den Einsatz der sogenannten bidirektionalen Kommunikation. Anders als bei einer herkömmlichen Funkschlüssel-Zentralverriegelung werden vom dem Funkschlüsselsender nicht nur Signale an das Schließsystem gesendet, sondern auch Informationen von dem Schließsystem empfangen. Dabei ist der Funkschlüsselsender als Transceiver ausgeführt. Mit dem sogenannten Passive Start and Entry (PASE) entriegeln die Türen allein durch Berührung des Türgriffs und der Motor kann auf Knopfdruck ohne Schlüssel gestartet werden. Dabei besitzt der fahrzeugseitige Transceiver einen Speicher, der einen Identifikationscode speichert, der den Funkschlüsselsender identifizieren kann.

Der Austausch von Informationen mit verschiedenen Fahrzeugen, die am Verkehr teilnehmen, und zwischen Fahrzeug und Infrastruktur kann in Zukunft zur Erhöhung der Sicherheit der Verkehrsteilnehmer sowie des Komforts der Fahrzeugführer beitragen. Diese Kommunikation von Fahrzeug zu Fahrzeug bzw. von Fahrzeug zur Infrastruktur, die im Folgenden Fahrzeug-zu-X Kommunikation (C2X Kommunikation) genannt wird, kann nur genutzt werden, wenn eine gewisser Anteil der beteiligten Fahrzeuge oder Infrastruktureinheiten mit entsprechenden Kommunikationseinheiten ausgerüstet ist, die auf derselben Technologie beruhen. Vor allem bei der sich schnell wandelnden Kommunikationstechnologie und abhängig von den Preisvorstellungen der Fahrzeugführer kann der für die Aufrüstung der Fahrzeuge verbundene zusätzliche Aufwand für die Bereitstellung und Installation solch einer Kommunikationseinheit zu hoch sein. Daher werden einfache und kostengünstige Lösungsmöglichkeiten gebraucht, die vielen Fahrzeughaltern die Fahrzeug-zu-X-Kommunikation zur Verfügung stellen können.

Weiterhin ist es bekannt, dass Notfallfahrzeuge wie beispielsweise Feuerwehrwägen, Krankenwägen oder Ähnliches auf eine gut funktionierende Kommunikation im Falle eines Einsatzes angewiesen sind. Hier sind Kommunikationstechniken für Fahrzeug-zu-Fahrzeug oder Fahrzeug-zu-Einsatzleitung notwendig, um Nachrichten an andere Einsatzkräfte aussenden zu können und den Rettungseinsatz schnell koordinieren zu können.

Geht ein Notruf beispielsweise über Telefonanruf ohne genaue Positionsangabe bei einer Rettungsleitstelle ein, so sendet diese Einsatzkräfte aus. Häufig ist die Positionsangabe der Anrufenden nicht genau genug und die Rettungskräfte müssen vor Ort die Verunfallten bzw. ein zu suchendes Objekt erst finden. Dafür können den Suchtrupps beispielsweise Sendeausrüstungen wie Sprechfunk zur Verfügung stehen. Jedoch ist die Abstimmung per Sprechfunk in der Praxis zum Teil ungenau oder funktioniert nicht bzw. nicht gut genug. Daher ist ein Bedarf an einer Fahrzeug-zu-Fahrzeug-Kommunikation bei Noteinsätzen gegeben, die zuverlässig funktioniert.

US 5,635,923 beschreibt einen Empfänger eines RKE-Systems, der öffentliche Rundfunknachrichten empfangen kann.

EP 1 216 890 A1 beschreibt eine Einrichtung zur Übermittlung eines Notrufs eines Fahrzeugs. Für die Notrufübermittlung wird ein Mobiltelefon 18 eingesetzt, welches über eine kurzreichweitige Kommunikationsverbindung mit dem Fahrzeug kommunizieren kann und zur Übertragung des Notrufs das Mobiltelefonnetz, also eine langreichweitige Kommunikationsverbindung, nutzt.

### Zusammenfassung der Erfindung

Es ist eine Aufgabe der Erfindung, eine Fahrzeug (Car to X bzw. C2X)-Kommunikation bereitzustellen, basierend auf bereits existierenden Fahrzeugtechnologien.

Diese Aufgabe wird gelöst durch eine Kommunikationsvorrichtung zur Funkschlüssel-Fahrzeug-zu-X-Kommunikation, ein Fahrzeug mit einer Kommunikationseinrichtung für eine Funkschlüssel-Fahrzeug-zu-X-Kommunikation, einem Verfahren zur Funkschlüssel-Fahrzeug-zu-X-Kommunikation, sowie ein Programmelement und ein computerlesbares Medium gemäß den Merkmalen der unabhängigen Ansprüche. Weiterbildungen der Erfindung ergeben sich aus den Unteransprüchen.

Die im Folgenden beschriebenen Ausführungsbeispiele betreffen gleichermaßen die Kommunikationsvorrichtung, das Fahrzeug, das Verfahren, das Programmelement und das computerlesbare Medium. In anderen Worten, lassen sich Merkmale, die im Folgenden beispielsweise im Hinblick auf die Kommunikationsvorrichtung beschrieben werden, auch als Verfahrensschritte implementieren und umgekehrt.

Gemäß einem Ausführungsbeispiel der Erfindung ist eine Kommunikationsvorrichtung angegeben für ein Fahrzeug, die eine Funkschlüsseleinrichtung (RKE bzw. Remote Keyless Entry) mit einem Fahrzeugmodul bzw. Funkschlüsselempfänger und einem tragbares Modul bzw. Funkschlüsselsender aufweist. Das Fahrzeugmodul und/oder das tragbare Modul ist als Transceiver ausgeführt, wobei der Transceiver zum drahtlosen Empfangen und Senden von Fahrzeug-zu-X-Kommunikationsdaten an ein weiteres Fahrzeug oder eine Infrastruktur ausgeführt ist.

Auf diese Weise können Car-to-X-Anwendungen über den Funkschlüssel verfügbar gemacht werden. Da eine Funkschlüsseltechnik bereits bei vielen Fahrzeugen implementiert ist, kann die Kommunikation von Funkschlüssel zu Fahrzeug-zu-X sehr einfach und schnell eingeführt werden. Damit kann auch das Entwicklungsrisiko reduziert werden. Die Position eines Fahrzeuges kann beispielsweise in Kombination mit Zeitstempel und Identifikationsnummern über den Funkschlüssel von den Fahrzeugen zyklisch ausgesendet werden. Auf dieser Basis können die anderen Fahrzeuge, die auch diese Technologie aufweisen, Informationen über ihre benachbarten Fahrzeuge erhalten.

Ferner können von anderen Fahrzeugen Warnhinweise an die anderen Mitfahrer weitervermittelt werden. Wird in den Funkschlüsseln von Notfalleinsatzwägen diese Car-to-X-Funktionalität eingeführt, können auch Suchtruppen und Einsätze darüber koordiniert werden. Die Car-to-X-Funktionalitäten können entweder fahrzeugseitig oder in dem externen Funkschlüsselsender, der als Transceiver ausgeführt ist, implementiert werden.

Die Fahrzeug-zu-X-Kommunikation kann mit anderen Fahrzeugen, die diese Funkschlüsseltechnologie und eine Car-to-X-Implementierung aufweisen, erfolgen. Dabei sollten sich die weiteren Fahrzeuge innerhalb einer vorbestimmten Reichweite befinden. Eine weitere Möglichkeit, Daten weiter als eine bestimmte Reichweite eines Funkschlüssels zum nächsten zu übertragen, ist ein Speicher- und Weiterleitungssystem, das sogenannten Store-and-Forward-System. Mit Hilfe eines geeigneten Speichers in der Funkschlüsseleinrichtung können die gewünschten Kommunikationsdaten gespeichert werden und über eine Zwischenstation bzw. Fahrzeug zu einem weiter entfernten Fahrzeug weitertransportiert werden. Auf diese Weise können Lücken, die sich aus einer geringen Anzahl von mit C2X-Technologie ausgestatteten Verkehrsteilnehmern bzw. geeigneten Infrastruktureinrichtungen ergeben können, überbrückt werden.

Gemäß einem weiteren Ausführungsbeispiel der Erfindung wird eine Kommunikationsvorrichtung bereitgestellt, die eine Schnittstelle zu einer Positionsbestimmungseinheit zum Erstellen von Positionsdaten eines benachbarten Fahrzeuges aufweist.

Für die Funktionalität der Car-to-X-Kommunikation über den Funkschlüssel ist es entscheidend, eine relative Positionierung im Vergleich zu den anderen Kommunikationspartnern bzw. Fahrzeugen herstellen zu können. Hierzu kann beispielsweise GPS in Kombination z. B. mit Koppelnavigation (Dead Reckoning) oder vergleichbaren Technologien eingesetzt werden. Bei der Koppelnavigation wird die Position des Fahrzeuges durch Messen einer Bewegungsrichtung, der Fahrzeuggeschwindigkeit und Zeit ermittelt.

Als weitere Positionierungstechnologie kann auch die Abstandsmessung mittels Feldstärkemessung verwendet werden. Nach einer Kombination mit der gemessenen Fahrtrichtung des Fahrzeuges z. B. auf einem digitalen Kompass kann auf diese Weise genau festgestellt werden, wo sich das Fahrzeug im Verhältnis zum anderen Fahrzeug befindet. Auf diese Weise könnte eine drohende Gefahr des Zusammenstoßes zweier Fahrzeuge, den Fahrzeugen umgehend gemeldet werden. Dies kann die Sicherheit der Verkehrsteilnehmer signifikant erhöhen.

Gemäß einem weiteren Ausführungsbeispiel der Erfindung sind die Car-to-X-Kommunikationsdaten ausgewählt aus einer Gruppe bestehend aus Positionsdaten, Zeitstempel, Umfelddaten, Warnsignale, Kennungsdaten, Geschwindigkeitsdaten, Richtungsdaten und weitere Informationsdaten.

Dabei können die Positionsdaten zu relativen Positionierung der Fahrzeuge bzw. Infrastrukturen den an der Car-to-X-Kommunikation teilnehmenden Fahrzeugen mitgeteilt werden. Durch die Angabe von Umfelddaten können beispielsweise Informationen wie die Position eines Hindernisses, die von Umfeldsensoren empfangen werden können, einem Fahrzeugführer zur Warnung zur Verfügung gestellt werden. Weiterhin können auch Warnsignale ausgegeben werden, wenn eine bestimmte Temperatur z. B. unterschritten wird, so dass Eisglätte zu erwarten ist. Kommunikationsdaten, wie Zeitstempel, Position, Fahrtrichtungsdaten und Geschwindigkeitsdaten können die relative Positionierung sehr genau bestimmen und beispielsweise den Verkehrsteilnehmern Staus oder drohende Zusammenstöße rechtzeitig bzw. im Voraus melden.

Weiterhin ist es wichtig, Kennungsdaten zu versenden, um die Sicherheit bzw. Datensicherheit der Teilnehmer der Car-to-X-Kommunikation zu gewährleisten. Der Transceiver kann auf diese Weise eindeutig aus einer Vielzahl von Sendern identifizieren, ob eine Übereinstimmung mit einem gültigen Sicherheits- oder Identifikationscode besteht. Die Kennungsdaten ermöglichen auch eine Personalisierung der Funktionen eines Funkschlüsseleinrichtungs-Systems auf ausgewählte Personen oder Gruppen. Beispielsweise können Notfallfahrzeuge andere Identifikationscodes aufweisen als normale Verkehrsteilnehmer, so dass die Informationen von Notfallleitstellen auch nur an die gewünschten Adressaten gesendet wird. Auf diese Weise kann durch eine entsprechende Verarbeitung der zu sendenden Daten ein höheres Vertrauen der die Kommunikation nutzenden Teilnehmer entstehen.

Dem Fahrzeug kann im Rahmen von weiteren Informationsdaten über den Funkschlüssel Verkehrsflussdaten wie Staumeldungen, Baustellen, mögliche Umleitungen oder Warninformationen vor Einsatzfahrzeugen, Straßenwetter, Stauende sowie Infotainment wie Internetdaten oder Standortinformationen zur Verfügung gestellt werden.

Gemäß einem weiteren Ausführungsbeispiel der Erfindung wird eine Kommunikationsvorrichtung bereitgestellt, wobei das Fahrzeug ein Einsatzfahrzeug ist, das nach dem Auffinden einer Unfallstelle seine Positionsdaten als Ortungssignal über die Kommunikationsvorrichtung an weitere Einsatzfahrzeuge zur Koordination des Einsatzes sendet.

Findet ein Einsatzfahrzeug das gesuchte Objekt bzw. die gesuchte Person, kann es auf diese Weise ein Signal mittels drahtloser Funkschlüsseltechnik (RKE) an die weiteren Fahrzeuge des Einsatzes weiterleiten. Auf diese Weise kann schnelle Hilfe am Unfallort gewährleistet werden. Das Signal kann die Position des Einsatzfahrzeuges, wie z. B. die GPS-Position, Straßennamen oder charakteristische örtliche Gegebenheiten an das andere Fahrzeug der Einsatzgruppe senden. Das Signal des Suchtrupps kann ferner noch enthalten, ob alle gesuchten Objekte bzw. Personen gefunden wurden, oder nur ein Teil davon. Wurde nur ein Teil gefunden, so können die anderen Suchtrupps sich für die weitere Suche auf das Gebiet um die Erstfundstelle konzentrieren, bzw. die Suchkriterien aufgrund der ersten Fundstelle anpassen. Anstelle der Einsatzfahrzeuge können auch einzelne Personen der Suchtrupps mit mobilen RKE-Modulen ausgerüstet werden, so dass die Kommunikation auch zwischen einzelnen Personen stattfinden kann und diese nicht erst zum Fahrzeug zurückkehren müssen, wenn sie zu Fuß unterwegs sind.

Gemäß einem weiteren Ausführungsbeispiel der Erfindung wird eine Kommunikationsvorrichtung bereitgestellt, die ferner eine Anzeigevorrichtung aufweist, die ausgelegt ist, um Fahrzeug-zu-X-Kommunikationsdaten zu empfangen und anzuzeigen.

Auf diese Weise kann die bidirektionale Kommunikation des Funkschlüssels nicht nur durch die Erweiterung der Car-to-X-Kommunikation verbessert werden, sondern auch durch den Einsatz von Display-Technologien. So können auf diesen Displays Positionen der anderen Fahrzeuge dem Funkschlüssel angezeigt werden. Anzeigen, wie ob das Fahrzeug entriegelt oder verriegelt ist, das Licht noch an oder aus ist, der Tankinhalt oder eine Reihe anderer Informationen können ebenfalls auf Anfrage im Display des Funkschlüssels angezeigt werden. Anstelle eines kleinen Displays auf dem Funkschlüssel selbst können auch Display-Vorrichtungen, die an die Fahrzeugcomputersysteme angeschlossen sind, vorgesehen werden. So z. B. könnte das Display eines Navigationssystems verwendet werden, um auch Daten der Fahrzeug-zu-X-Kommunikation anzeigen zu können. Auf diese Weise können bereits bestehende Displays des Fahrzeuges genutzt werden.

Gemäß einem weiteren Ausführungsbeispiel der Erfindung wird eine Kommunikationsvorrichtung mit einem fahrzeugseitigen Navigationssystem bereitgestellt, das ausgelegt ist, das Ortungssignal zu empfangen und auf einer digitalen Karte eine Zielführung auf der Anzeigevorrichtung anzuzeigen.

Auf diese Weise können beispielsweise Suchtrupps koordiniert und auf dem kürzesten Weg zur Unfallstelle geführt werden, da die Position des sendenden Suchtrupps in einer digitalen Karte angezeigt und für eine Zielführung eine Navigation verwendet werden kann. Damit nur Suchtrupps das Signal erhalten, die auch an dem Einsatz beteiligt sind, kann zusätzlich eine Kennung in das Signal integriert werden. Andere Verkehrsteilnehmer können weiterhin gewarnt werden, dass sich ein Einsatzfahrzeug nähert, und so frühzeitig die Zufahrtswege freimachen.

Ferner können andere Fahrzeuge, die die Fahrzeug-zu-X-Kommunikation nutzen, Informationen über Staus in ihre Navigationssysteme leiten und somit eine andere Zielführung zum Ziel initiieren. Bei akuter Blitzeisgefahr könnte beispielsweise die Information gesendet werden, welche Straßen bereits gestreut worden sind und daraufhin auch die Zielführung im Navigationssystem entsprechend anpassen.

Gemäß einem weiteren Ausführungsbeispiel der Erfindung sind die Fahrzeug-zu-X-Kommunikationsdaten zusätzlich auch auf Basis einer weiteren Kommunikationstechnik mit einer höheren Bandbreite vom Empfänger und Sender auf Basis eines Standardformats empfangbar und aussendbar.

Sind nur wenige Fahrzeuge, die mit einer Funkschlüsseleinrichtung ausgestattet sind, um die Funktionalität von Car-to-X erweitert, reicht eine niedrige Bandbreite mit Datenraten von typischerweise bis zu 20 kbit/sec aus, um die Car-to-X-Anwendungen darstellen zu können. Verfügen jedoch immer mehr Fahrzeuge über Car-to-X-Anwendungen über eine Funkschlüsseleinrichtung, so könnte die Datenrate nicht mehr ausreichen. Hier bietet es sich an, auf Basis einer weiteren Kommunikationstechnik mit einer höheren Bandbreite einen zweiten Kommunikationskanal zu ergänzen. Diese Möglichkeit zur Kommunikation mit einer höheren Bandbreite kann bei Neufahrzeugen direkt im Werk den Fahrzeugen zur Verfügung gestellt werden. Bei bereits im Markt befindlichen Fahrzeugen kann dies über eine Nachrüstung geschehen oder über den Austausch z. B. einer intelligenten Antenne, wobei diese Antenne einen Transceiver beinhaltet.

Nachrüstgeräte für die Car-to-X-Kommunikation können auf Dedicated Short Range Communication (DSRC) beruhen, die beispielsweise den Kommunikationsstandard IEEE 802.11p verwendet und eine hohe Datenrate von 3 bis 27 Mbps aufweist. DSRC ist eine bidirektionale Funktechnik für die Fahrzeug-zu-Fahrzeug-Kommunikation bzw. Fahrzeug-zu-stationären-Geräten-Kommunikation. DSRC besitzt eine kurze bis mittlere Reichweite mit kurzer Zugriffszeit und hohen Datenraten. Ein bekannter IEEE DSRC-Standard ist der IEEE 802.11p, welcher als favorisierte Technologie der Car-to-Car-Kommunikation gilt und um den Standard 802.11a für den Einsatz in Fahrzeug-zu-X-Kommunikationsnetzen erweitert werden kann. Dabei sollten die Frequenzen so wählbar sein, dass sie kompatibel sind mit Standards in anderen Ländern, wie Europa oder gegebenenfalls USA.

Weiterhin sollte der verwendete ergänzende Kommunikationsstandard Fahrzeughersteller übergreifend sein, um für mit diesem Kommunikationskanal ausgestattete Fahrzeuge möglichst flächenabdeckend eine drahtlose Kommunikation im Straßenverkehr bereitzustellen. Das geplante Frequenzband könnte dabei bei 5.850 bis 5.925 GHz liegen, wie es bereits für die USA für den Einsatz im Verkehrsbereich reserviert worden ist. Auf diesem 75 MHz breiten Frequenzband können mehrere Kanäle zur Verfügung gestellt werden, wobei beispielsweise ein Kanal für die "normale" Car-to-Car-Kommunikation reserviert ist und ein anderer Kanal für die sicherheitskritische Kommunikation, wie z.B. mit Rettungsfahrzeugen.
Die Car-to-X-Kommunikation über Funkschlüssel kann vorzugsweise über ein Physical Layer bzw. Medium Access Layer PHY/MAC Layer gemäß dem Standard IEEE802.15.4-2006 erfolgen. Der Physical Layer PHY kontrolliert den RF-Transceiver und führt Kanalauswahlen sowie Signalmanagement aus. Mit Hilfe des IEEE802.15.4-2006 Standards können lizenzfreie ISM-Bänder genutzt werden und ein Parallelbetrieb mit anderen Sendern auf diesen Frequenzen, insbesondere Wireless LAN erfolgen. Als Frequenz kann entweder eines der ISM-Bänder wie 443 MHz oder 868 MHz verwendet werden, oder ein dediziertes Frequenzband im Bereich zwischen 870 MHz und 876 MHz. Die 2006er Version verbessert die maximale Datenrate der 868 MHz-Bänder auf 100 kBit/s.

Auf diese Weise können wichtige Services im Hinblick auf Verkehrssicherheit und Verkehrsinformationen den Fahrzeugen bereitgestellt werden, sowie eine schnellere Koordination von Einsatzfahrzeugen gewährleistet werden.

Gemäß einem weiteren Ausführungsbeispiel der Erfindung ist die weitere Kommunikationstechnik ausgewählt aus einer Gruppe, bestehend aus WLAN-Technik basierend auf IEEE802.11 Standards, zellulärer Funk basierend auf GSM, UMTS, LTE, WiMAX und Kommunikationstechnik basierend auf DSRC.

Die genannten Kommunikationstechniken können die Fahrzeug-zu-X-Kommunikation für intelligente Transportsysteme (Intelligent Transport Systems, ITS) verwendet werden. ITS ist der Oberbegriff für die Integration von Informationstechnologien in Transportsysteme. Eine mögliche Architektur für ITS könnte zukünftig von der European Telecommunications Standards Institute (ETSI) standardisiert werden und in den entsprechenden Kommunikationsnetzen eingebettet werden.

Für eine Fahrzeug-zu-X-Kommunikation ist eine Implementierung nach dem Standard 802.11p vorstellbar. Dieser Standard zeichnet sich durch die Möglichkeit einer Ad-hoc-Kommunikation und hohe Reichweiten aus und bietet ferner im Allgemeinen hohe Datenübertragungsraten. Wird eine Architektur, die eigentlich für IEEE 802.11p gedacht ist, verwendet, so bietet es sich an, die Daten in einer der ITS-Architektur entsprechenden Form weiterzuleiten, so dass im Verlauf kein Unterschied zu den Daten zu erkennen ist, die über IEEE 802.11p empfangen wurden. Somit ergibt sich auch ein problemloser Übergang zwischen Funkschlüsselkommunikationstechnik und IEEE 802.11p.

Ein reibungslosen Übergang zu IEEE 802.11p bietet sich an, wenn die Car-to-X über Funkschlüsselkommunikation Botschaften angelehnt an die aktuelle ETSI-Standardisierung verwendet. Dabei werden das gleiche Schema an Botschaften und deren Bedeutung verwendet. Eine andere Möglichkeit der Botschaftsdefinition stellt das ITS Standardprogramm SAE J2735 dar, das für 5,9 GHz DSCR genutzt werden kann.

Die Fahrzeug-zu-Fahrzeug-Kommunikation kann auch über die Standards 802.11a/b/e/n erfolgen. Weiterhin besteht die Möglichkeit, Daten, die bereits von Travel and Traffic Information (TTI) Verfügung gestellt werden zu nutzen. So können Daten von Straßenüberwachungssensoren oder der Traffic Message Channels des Radio Datensystems (RDS-TMC)von der Funkschlüsseleinrichtung empfangen und bearbeitet werden. Nahezu alle Mittelklassewagen, die ein Navigationssystem aufweisen, können RDS-TMC empfangen.

Über den Start von Fahrzeug-to-X-Kommunikation über Funkschlüssel und die erst spätere Ergänzung durch andere Kommunikationstechniken kann ein sehr schnelles Einführungsszenario auf Basis existierender Technologien ermöglicht werden. Ferner wird das Entwicklungsrisiko bei den sich schnell verändernden Kommunikationstechniken reduziert.

Gemäß einem weiteren Ausführungsbeispiel der Erfindung umfassen die Fahrzeug-zu-X-Kommunikationsdaten eine Kennung, die anzeigt, welche weitere Kommunikationstechnik in einem oder mehreren Fahrzeugen integriert ist.

Um in einer sogenannten Übergangszeit zu erkennen, ob ein Fahrzeug nur mit der niederbandbreitigen Funkschlüsselkommunikation ausgerüstet ist oder bereits über die hohe Datenrate beispielsweise des IEEE802.11p Standards verfügt, kann über den Funkschlüssel eine entsprechende Kennung versendet werden. Diese Kennung zeigt an, ob in dem betreffenden Fahrzeug parallel zu der Funkschlüssel-Car-to-X-Kommunikationsfunktion auch noch der IEEE802.11p Standard verbaut ist. Diese Kennung kann einfach in einem Bit im Kommunikationsheader mitgesendet werden. Bei einer hohen Datenrate kann gegebenenfalls auf das weitere Kommunikationsmodul zurückgegriffen werden. Bei Erkennung eines ausschließlichen Funkschlüsselsystems, können die Daten der Funkschlüssel-Car-to-X-Kommunikation auf dem RKE-Kanal reduziert werden.

Vorzugsweise wird auch dem Fahrer angezeigt, welche Ausbaustufe in seinem Fahrzeug bereitgestellt ist und wie gut sein Umfeld bzw. die anderen Fahrzeuge in Reichweite ausgerüstet sind. Beispielsweise könnt dem Fahrer angezeigt werden, welcher Prozentsatz an Car-to-X-Partnern mit IEEE802.11p ausgerüstet sind. Diese Information kann auch als Kaufanreiz dienen für Fahrzeughalter, die noch nicht diese Erweiterung installiert bzw. implementiert haben.

Gemäß einem weiteren Ausführungsbeispiel der Erfindung weist die Kommunikationsvorrichtung eine Speichereinheit zur Bereitstellung von Fahrzeug-zu-X-Kommunikationsdaten auf.

Gerade bei niedrigen Ausstattungsraten ist es wichtig, eine sogenannte Speicherfunktion zur Verfügung zu haben. Auf diese Weise können Informationen über ein nächstliegendes Fahrzeug, das auch über C2X-Kommunikationsfunktionen verfügt, an ein weiter entferntes Fahrzeug gesendet werden, indem die Informationen zwischengespeichert und zu einem späteren Zeitpunkt an das jeweilige Zielfahrzeug bzw. Infrastrukturstation weitergeleitet wird. Dieses sogenannte Store-and-Forward-Verfahren beruht also darauf, eine Funkverbindung zwischen Informationsquelle und -ziel über weiterleitende Fahrzeuge herzustellen.

Über die sogenannte Store-and-Forward-Funktion kann die Kommunikationseinheit Daten empfangen, zwischenspeichern und wieder ausgeben, wenn ein weiterer Kommunikationsteilnehmer mit der Entsprechenden Kommunikationstechnik in die Nähe kommt. Um bei geringen Ausstattungsraten in der Einführungsphase auch die Informationen weitertragen zu können, können die Kommunikationsdaten auch an Bord von Fahrzeugen der Gegenfahrbahn weitergeleitet werden. So kann beispielsweise ein Fahrzeug, das in einem Stau steht, einem weiteren Fahrzeug auf der Gegenspur die Existenz des Staus melden, woraufhin das zweite Fahrzeug diese Information mitnimmt und nach einiger Zeit an ein drittes Fahrzeug auf der Stauspur weitergeben kann. So kann das Fahrzeug frühzeitig auf den Stau aufmerksam gemacht werden und entsprechend reagieren.

Die Store-and-Forward-Funktion kann ein dezentralisiertes, selbstorganisierendes Verkehrsinformationssystem den Fahrzeugführern zur Verfügung stellen, wobei eine digitale Karte mit einem Positionierungssystem, beispielsweise GPS, und eine drahtlose Ad-hoc-Kommunikationstechnik zwischen den Fahrzeugen eingesetzt werden kann. Dieses Verfahren ist schneller und meist aktueller als ein konventionelles Verkehrsinformationssystem, das meist zentralistisch organisiert ist, wobei es zu Zeitverzögerungen der neuen Meldungen bzw. Aktualitätsproblemen der gesendeten Informationen kommen kann. Ein Beispiel für ein konventionelles zentrales Informationssystem ist die Übermittlung über RDS, die der Fahrzeugführer über Radio empfangen kann.

Mittels Fahrzeug-zu-Fahrzeug-Kommunikation können die Fahrzeuge sich gegenseitig über die lokalen Verkehrssituationen informieren. Dabei kann die Verkehrssituation, sobald es in die Reichweite eines Informationsträgers- und Senders kommt, von jedem einzelnen Fahrzeug analysiert werden. Jede Information, die ein Fahrzeug ausgibt, kann durch einen Zeitstempel spezifiziert werden. Gefährliche Situationen können auf diese Weise vorab erkannt werden und beispielsweise die Position eines schlecht einsehbaren Stauendes dem Fahrer zur Warnung angezeigt werden.

Gemäß einem weiteren Ausführungsbeispiel der Erfindung weist die Kommunikationsvorrichtung ferner einen Mikroprozessor zur Verarbeitung der Fahrzeug-zu-X-Kommunikationsdaten auf, sowie zum Ausführen von Kommunikations-Stacks, wobei die Daten ein Standardformat eines intelligenten Transportsystems aufweisen. Das verwendete Standardprotokoll bzw. das Stack-Design sollte insbesondere für die drahtlose Kommunikation entwickelt sein. Die Stack-Architektur u.a. kann den Verbindungsaufbau herstellen und kontinuierlich prüfen, ob die Verbindung weiterhin besteht.

Bei der Car-to-X-Kommunikation über den Funkschlüssel können Rohdaten an einen Mikroprozessor weitergeleitet werden, der diese Daten verarbeitet und Kommunikations-Stacks ausführen kann. Dieser Prozessor kann im Funkschlüsselmodul selbst integriert sein und neben der Car-to-X-Funktion auch die üblichen Funktionen eines Funkschlüssels selbst ausführen. Auf Grundlage dieses Synergieeffektes kann ein einzelner Prozessor für mehrere Funktionen verwendet werden.

Um auch nach der Einführung der ersten Kommunikationssysteme, die eine Funkschlüssel-Car-to-X-Funktionalität besitzen, noch Änderungen oder Weiterentwicklungen an der Kommunikation bzw. Kommunikations-Stacks durchführen zu können, bietet es sich an, große Teile des Kommunikations-Stacks durch Software erneuerbar zu gestalten. So ist insbesondere das Kommunikationsprotokoll an zukünftige Anforderungen anpassbar.

Gemäß einem weiteren Ausführungsbeispiel der Erfindung ist eine Anpassung einer Betriebssoftware der Kommunikationsvorrichtung über das tragbare Modul und/oder eine direkte Funkkommunikation zum Fahrzeugmodul ausführbar.

Ein Update der Funkschlüsseleinrichtungssoftware kann dabei einerseits über das mobile und tragbare Modul bzw. Funkschlüsselsender erfolgen. Von einem Computer kann eine Software über das tragbare Modul des Funkschlüssels aufgespielt werden und dann auf die Funkschlüssel-Hardware übertragen werden. Andererseits kann die Möglichkeit gegeben werden, eine direkte Funkdiagnose-Kommunikation über das Fahrzeugmodul herzustellen, um auf diese Weise ein Software-Update der Funkschlüsseleinrichtung analog zu einem klassischen Update über einen Diagnosestecker auszuführen.

Gemäß einem weiteren Ausführungsbeispiel der Erfindung weist die Funkschlüsselvorrichtung ein Mid-Range oder Long-Range Front End auf.

Auf diese Weise ist eine gute Skalierbarkeit gewährleistet. Die verschiedenen Front Ends können eingesetzt werden, um unterschiedliche Reichweiten zu erzielen. Diese Frontends haben bei üblichen Funkschlüsseleinrichtungen typischerweise die Bezeichnung Mid-Range oder Long Range für mittlere bzw. lange Reichweiten. Die Reichweite der Mid-Range RKE Systeme beträgt üblicherweise bis zu 100 m, während Long-Range Anwendungen die Datenübertragung über Distanzen von mehreren 100 m zur Verfügung stellen. So können beispielsweise preiswerte Fahrzeuge oder Fahrzeuge aus dem unteren Preissegment mit einer geringeren Reichweite ausgerüstet werden als z. B. Fahrzeuge aus höheren Preisklassen. Durch den Einsatz dieser verschiedenen Front Ends können die Fahrzeuge unabhängig von der Fahrzeugklasse miteinander kommunizieren.

Gemäß einem weiteren Ausführungsbeispiel der Erfindung wird ein Fahrzeug mit einer Kommunikationsvorrichtung bereitgestellt, die eine Funkschlüsseleinrichtung mit einem Funkschlüsselempfänger und einem Funkschlüsselsender aufweist, wobei eines der Komponenten als Funkschlüssel-Transceiver ausgeführt ist zum drahtlosen Empfangen und Senden von Fahrzeug-zu-X-Kommunikationsdaten.

Gemäß einem weiteren Ausführungsbeispiel der Erfindung wird ein Verfahren zur Fahrzeug-zu-X-Kommunikation bereitgestellt, aufweisend: Empfangen und Senden von Fahrzeug-zu-X-Kommunikationsdaten durch einen Transceiver.

Dies bedeutet, der Funkschlüssel ist ausgelegt, nicht nur Daten von einem tragbaren Modul zu empfangen, um eine schlüssellose Fahrberechtigung zu initiieren, sondern auch Fahrzeug-zu-X-Kommunikationsdaten zu empfangen bzw. zu senden. Mit einem geeigneten Speicher können diese Fahrzeug-zu-X-Kommunikationsdaten auch gespeichert werden. Durch eine geeignete Verbindung mit der Hardware des Funkschlüssels können auch fahrzeugseitige Daten drahtlos oder drahtgebunden von dem Fahrzeug übertragen werden und gegebenenfalls nach außen weitergeleitet werden. Als Übertragungstechniken dienen hier beispielsweise Bluetooth, USB, Wireless LAN, oder andere Übertragungsmedien. So kann z. B. die Information über die Tankfüllung oder Fahrzeuginnentemperatur an den Fahrer weitergeben werden. Analog zu Fahrzeugdiagnosen können mit geeignetem Personal Fahrzeugdaten ausgewertet werden, um im Falle eines Liegenbleibens aufgrund von Fehlfunktionen des Fahrzeuges schnelle Hilfe leisten zu können. Mit geeigneten Identifikationscodes kann es lediglich Experten möglich sein, die Analysedaten mittels Funkschlüssel auszulesen.

Gemäß einem weiteren Ausführungsbeispiel der Erfindung wird ein Programmelement bereitgestellt, das wenn es auf einem Mikroprozessor einer Kommunikationsvorrichtung ausgeführt wird, den Mikroprozessor anleitet, ein Verfahren zur Fahrzeug-zu-X-Kommunikation mittels Funkschlüsseleinrichtung auszuführen.

Gemäß einem weiteren Ausführungsbeispiel der Erfindung wird Computerlesbares Medium bereitgestellt, auf dem ein Programmelement gespeichert ist, das, wenn es auf einem Mikroprozessor einer Kommunikationsvorrichtung ausgeführt wird die Kommunikationsvorrichtung anleitet, ein Verfahren zur Fahrzeug-zu-X-Kommunikation mittels Funkschlüsseleinrichtung durchzuführen.

Im Folgenden werden zur weiteren Illustration der Erfindung beispielhaft Ausführungsbeispiele mit Verweis auf die Figuren beschrieben.

### Kurze Beschreibung der Erfindung

Fig. 1 zeigt Noteinsatzfahrzeuge mit einer Funkschlüsselbasierten Kommunikationsvorrichtung zur Koordination der Suchtruppen an einer unübersichtlichen Kreuzung.
Fig. 2 zeigt die Koordination von weiteren Einsatzfahrzeugen mit zwei Kommunikationsvorrichtungen.
Fig. 3 zeigt weitere Kraftfahrzeuge ausgestattet mit Funkschlüssel-basierten Kommunikationsvorrichtungen mit Speicher-Funktion.
Fig. 4 zeigt weitere Kraftfahrzeuge mit Kommunikationsvorrichtungen basiert auf Funkschlüssel zur Weitergabe von Fahrzeug-zu-X-Kommunikationsdaten vor einem Fahrzeugzusammenstoß.
Fig. 5 zeigt weiteres Kraftfahrzeug mit einer Funkschlüsselbasierten Kommunikationsvorrichtung zur Parkhausgebührenbezahlung.
Fig. 6 zeigt weitere Fahrzeuge ausgerüstet mit einer Funkschlüsselkommunikationsvorrichtung zur Weitergabe von Fahrzeug-zu-Fahrzeug-Kommunikationsdaten.
Fig. 7 zeigt eine schematische Ansicht eines Verfahrens gemäß einem Ausführungsbeispiel der Erfindung.

### Detaillierte Beschreibung der Ausführungsbeispiele

Die Darstellungen in den Figuren sind schematisch und nicht maßstäblich.

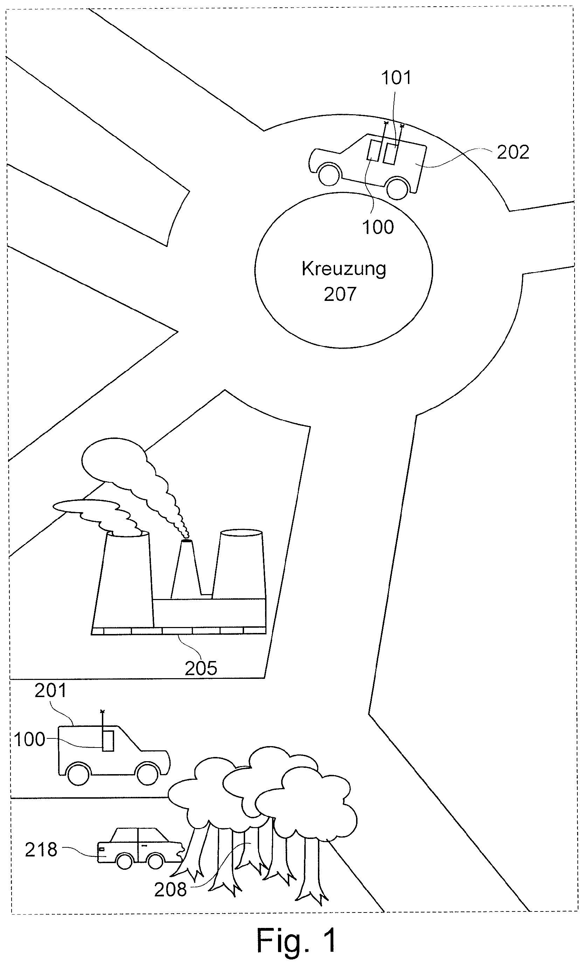

Fig. 1 zeigt zwei Einsatzfahrzeuge 201 und 202 mit einer Kommunikationsvorrichtung 100. Die Einsatzfahrzeuge können beispielsweise Fahrzeuge einer Feuerwehr oder eines Notarztes sein, die an einen Unfall gerufen worden sind. Das Unfallauto 218 hat einen Unfall an der Kreuzung 207 gemeldet. Jedoch ist die Unfallstelle hinter einer Baumgruppe 208, die entfernt und nicht einsehbar von der gemeldeten Kreuzung 207 ist. Das Einsatzfahrzeug 202, das sich in der Kreuzung befindet, stellt fest, dass die Kreuzung sehr groß ist und sich dort aber kein Unfall befindet. Daraufhin schwärmen die Einsatzfahrzeuge aus, um den Unfall zu finden.

Auf der Figur 1 ist dargestellt, dass ein Einsatzfahrzeug 201 den Unfall in einer Seitenstraße nahe der Kreuzung gegenüber einer Fabrik 205 findet. Daraufhin kann das Einsatzfahrzeug 201 per drahtloser Kommunikation über die Funkschlüsseleinrichtung (RKE)100 ein Signal aussenden, welches die anderen Einsatzfahrzeuge, die an der Suche beteiligt sind, empfangen können. Der Empfang geschieht durch geeignete Transceiver, die sich entweder an dem Funkschlüsselempfänger oder an dem Funkschlüsselsender der Funkschlüsseleinrichtung 100 befinden. Falls die Unfallstelle bekannt ist, können die anderen Fahrzeuge sich ebenfalls zu dieser begeben. Weiterhin kann das Fahrzeug 202 eine weitere Kommunikationseinrichtung 101 aufweisen, wie z. B. Mobilfunk oder Sprechfunk, um mit der Einsatzstellenleitung oder anderen Einsatzfahrzeugen kommunizieren zu können. Jedoch ist der Sprechfunk unter den Suchtrupps in der Praxis häufig fehlerbehaftet oder die Fahrzeugführer bzw. Rettungskräfte des Einsatzfahrzeuges 201 können den Sprechfunk nicht bedienen, da sie dem Unfallautoführer erste Hilfe leisten. Insbesondere bei Mobilfunk besteht bei sich bewegenden Fahrzeugen häufig das Problem plötzlich abbrechender Verbindungen oder einer deutlichen Reduzierung der Übertragungsqualität.

Im Gegensatz zum Sprechfunk kann der Funkschlüsselsender so eingestellt sein, dass er regelmäßig die gefundene Unfallstelle aussendet. Sobald andere Einsatzfahrzeuge in Reichweite des Senders kommen, können diese Informationen empfangen und beispielsweise ihr Navigationsgeräte damit speisen, so dass eine genaue und sichere Zielführung gegeben ist.

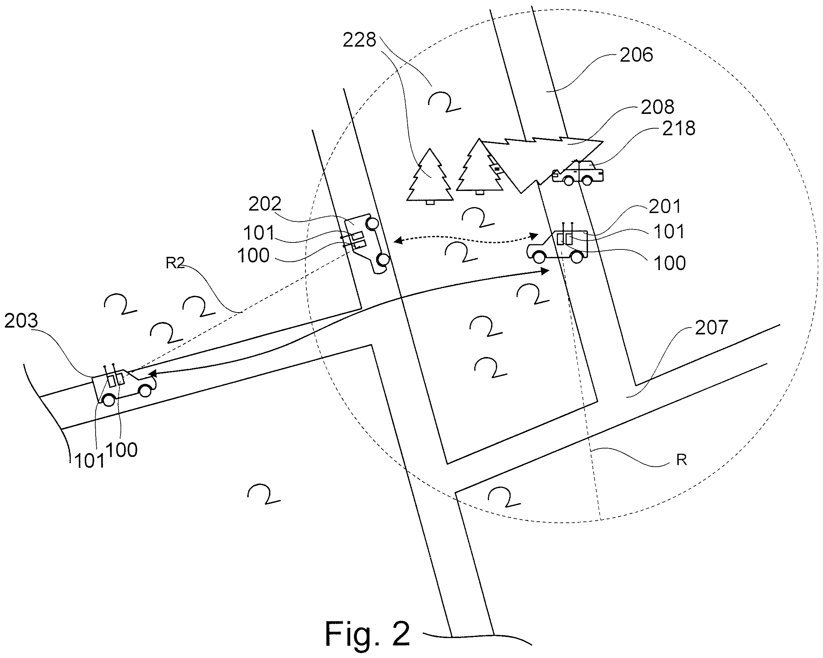

Fig. 2 zeigt drei Einsatzfahrzeuge 201, 202 und 203. Diese Einsatzfahrzeuge können beispielsweise Fahrzeuge der Feuerwehr sein, die eingesetzt werden, um Schäden, die bei Sturm entstehen zu beseitigen. Per Notruf kann durch die Wahl 112 bei der Rettungsleitstelle ein Unfall und Fahrbahnbehinderungen gemeldet werden. Jedoch befindet sich an der übermittelten Position kein Unfall, so dass die Einsatzkräfte ausschwärmen, um den Unfall zu suchen. Nach einiger Zeit findet ein Suchtrupp, in diesem Fall das Einsatzfahrzeug 201, eine Person in einem Wagen, der von einem umgefallenen Baum 208 getroffen worden ist.

Die Unfallstelle ist entfernt von der ursprünglich gemeldeten Stelle. Diese neuen Informationen können per Funkschlüsseleinrichtung an die weiteren Suchtrupps 202 gesendet werden, die sich innerhalb der Reichweite R des Funkschlüsselsenders bzw. -Transceivers befinden. Das dargestellte Beispiel zeigt eine Fahrbahn 206, die zu der Kreuzung 207 führt und durch den umgefallenen Baum 208 blockiert wird. Dabei ist das Unfallauto 218 nur über die Kreuzung 207 erreichbar, da der umgefallene Baum 208 den Zugang zu dem Auto versperrt. Um den Autoinsassen schnell Hilfe leisten zu können und sie beispielsweise aus dem Auto herauszuholen, ist eine schnelle Koordination der Einsatzkräfte notwendig. Die Reichweite R der Kommunikationseinrichtung 100 via Funkschlüsseleinrichtung ist in der Figur 2 durch den gestrichelten Kreis mit dem Radius R dargestellt. Das Einsatzfahrzeug 202 ist innerhalb der Reichweite R des Funkschlüssels und kann mit Hilfe der Kommunikationseinrichtung 100, d. h. über eine schlüssellose Fahrberechtigung, die Informationen der Unfallstelle empfangen.

Weiterhin können relevante Daten wie Anzahl der Verletzten oder bei umgefallenen Bäumen der Zugang zur Unfallstelle, nämlich dass nur von einer Seite die Rettung möglich ist, gemeldet werden. Die Positionsdaten und die Zugangsdaten zu der Unfallstelle können mittels Funkschlüssel diesem Fahrzeug einfach und zuverlässig weitergegeben werden. Das Fahrzeug 202 kann die Unfallstelle schnell mit Hilfe von geeigneten Positionsdaten und Zielführungsdaten über die Kreuzung 207 erreichen.

Ein weiteres Einsatzfahrzeug 203 ist außerhalb der Reichweite R der Funkschlüsseleinrichtung, so dass hier beispielsweise ein zellulärer Mobilfunk verwendet wird, um den Fahrzeugführer des Einsatzfahrzeuges 203 zu informieren. Der zelluläre Mobilfunk wird durch die Kommunikationseinheit 101 realisiert und empfängt die Daten, falls das Netzwerk des verwendeten Mobilfunks in dieser entlegenen Gegend ausreichend abgedeckt ist. Es ist möglich, die Kommunikationseinheit 101 über zellularen Funk GSM, EDGE, GPRS, UMTS und LTE, sowie WiMAX, auszuführen. Viele Kommunikationstechniken werden bereits für Mobilfunk verwendet, so dass die notwendige Infrastruktur hierfür je nach Region vorhanden sein kann. Durch den Einsatz von existierenden mobilen Kommunikationstechniken wie den Mobilfunknetzen kann die Kommunikation während der Fahrzeit des Fahrzeuges aufrecht erhalten werden. Zelluläre Netzwerke erlauben eine Zugangsmöglichkeit zu einer breiten Bandbreite von Datenservices, wie z. B. Internet Access. Die Schnittstelle zum Zellulärfunk kann entweder direkt im Fahrzeug installiert werden oder drahtlos über ein mobiles Telefon des Fahrzeugführers erfolgen.

Jedoch stellt sich insbesondere in entlegenen Regionen oder bei starken Unwettern das Problem, dass die Mobilfunknetze gar nicht bzw. unzureichend funktionieren, so dass der Empfang relativ schlecht sein oder während einer Kommunikation und eines Gesprächs abbrechen kann. Daher ist es von Vorteil, die Funkschlüsseleinrichtung als Kommunikationstechnik zu verwenden. Im vorliegenden Fall, den Fig. 2 darstellt, kann die Information, wo die Unfallstelle sich befindet und des besseren Zugangs mittels der Funkschlüsseleinrichtung 100 an das Einsatzfahrzeug 203 weitergegeben werden. So erfolgt über store and forward mittels der Funkschlüsseleinrichtung des Wagens 202 eine zuverlässige Weitergabe der Informationen. Die Reichweite R, die durch den Radius des Kreises gekennzeichnet ist, von dem Einsatzfahrzeug 201 reicht aus, um die Informationen zu dem Einsatzfahrzeug 202 zu übermitteln (gekennzeichnet durch den gestrichelten Pfeil). Die Reichweitee R2 reicht zur Weitergabe an das Einsatzfahrzeug 203, das eine Funkschlüsseleinrichtung mit derselben Reichweite R2 besitzt.

Andere Suchtruppen (nicht dargestellt)können dieses Signal empfangen und wissen daraufhin sofort, wo sich das gesuchte Objekt oder die gesuchte Unfallperson befindet. Sie können ihrerseits ihre Suche abbrechen und sich direkt zur Unfallstelle begeben. Auf diese Weise können die anderen Suchtruppen die Unfallstelle schnell finden und konzentrieren daraufhin die weitere Suche, falls noch weitere Personen vermisst sind, bzw. Unfallschäden gemeldet worden sind. Der Einsatz von Funkschlüssel-basierten Kommunikationseinrichtungen 100 kann daher insbesondere in Gelände, das schwer einsichtig ist oder eine unzureichende Netzabdeckung hat, wie z. B. dadurch, dass der Unfall in einem Waldgelände mit Laub und Nadelbäumen 228 stattfindet, günstig sein. Weiterhin ist der Einsatz von Funkschlüsseleinrichtungen von Vorteil in bergigem Gelände oder andere Gebieten in denen zellulärer Mobilfunk öfters nicht funktioniert.

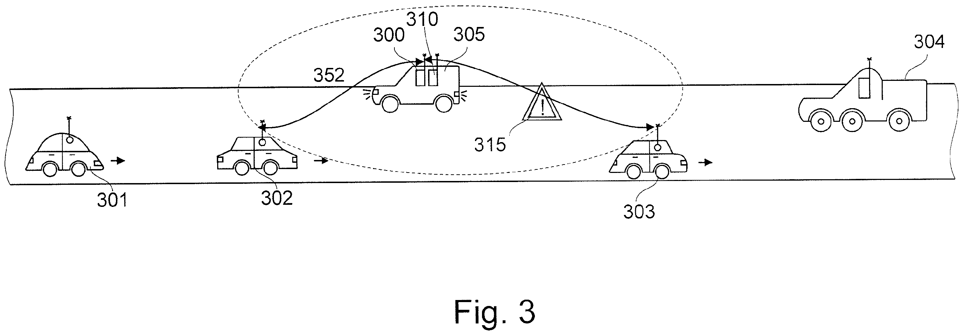

Fig. 3 stellt einen Unfall bzw. liegengebliebenes Fahrzeug 305 dar, das gekennzeichnet wird durch das Warndreieck 315. Das Unfallfahrzeug 305 ist mit einer Kommunikationseinrichtung 100 ausgestattet. Die Reichweite der Funkschlüssel-Kommunikationseinrichtung 300 ist durch den gestrichelten Kreis angedeutet. Die Information, dass dieses Unfallfahrzeug 305 liegengeblieben ist, können nur die nächstliegenden Fahrzeuge empfangen. Mit den Doppelpfeilen 352 und 353 ist dargestellt, dass die Fahrzeuge 302 und 303 die Information empfangen können. Die Fahrzeuge 301 und 302 sowie 303 befinden sich auf der Gegenfahrbahn und können die Information zwischenspeichern und einem weiter vom Unfall entfernten Fahrzeug 304 der Gegenfahrbahn die Information des Unfalls vermitteln.

Mit Hilfe dieser sogenannten Store-and-Forward-Funktion kann die Lücke geschlossen werden, die durch die begrenzte Reichweite des Fahrzeuges 305 entsteht. Dies kann natürlich nur dann erfolgen, wenn die Fahrzeuge mit der entsprechenden Kommunikationstechnik ausgestattet sind und zum gegebenen Zeitpunkt die Unfallstelle passieren. Dabei können die Funkeinrichtungen 100 verschiedene Reichweiten besitzen, solange die Informationen über denselben Informationsstandard weitergesendet werden.

Gerade bei niedrigen Ausstattungsraten ist es also wichtig, eine Store-and-Forward-Funktion zur Verfügung zu haben. Die entsprechenden Funkschlüsselkommunikationseinheiten empfangen dabei die Daten, speichern sie zwischen und geben sie wieder aus, wenn ein weiterer Kommunikationsteilnehmer in die Nähe kommt. Anstelle eines Unfalls, der hier in Fig. 3 dargestellt ist, kann es sich auch um einen Stau handeln, der dem anderen Verkehrsteilnehmer angezeigt werden soll. So ist es z. B. sinnvoll, wenn ein Fahrzeug im Stau ein zweites Fahrzeug auf der Gegenspur die Existenz des Staus mitteilt, dieses Fahrzeug, in diesem Fall 303, nimmt diese Information in den Speicher auf und gibt sie nachdem es die Reichweite des Fahrzeugs 304 erreicht hat, an dieses weiter. So kann das sich auf der Stauspur befindende Fahrzeug 304 frühzeitig auf den Stau aufmerksam gemacht werden und entsprechend reagieren, wie z. B., falls eine Ausfahrt(nicht dargestellt) noch vorhanden ist, die Staustrecke verlassen.

Das benötigte Speichermodul kann entweder in dem tragbaren Modul oder in dem Fahrzeugmodul bereitgestellt werden. Der Funkschlüsselsender bzw. die tragbares Modul des schlüssellosen Fahrberechtigungssystems kann jedoch bei der Speicherung träger sein als das fahrzeugseitige Transceiver-System des Fahrzeugmodules. Beispielsweise können im mobilen Funkschlüsselsender die Informationen üblicherweise mit 125 kHz gespeichert werden. Daher bietet es sich als Alternative an, die Daten direkt im fahrzeugseitigen Funkschlüsselempfänger bereitzuhalten und dort dem Speicher mit schnelleren Speichermöglichkeiten bereitzustellen.

Um den Ort des Staus oder des Unfalls genau fixieren zu können, ist bei der Fahrzeug-zu-Fahrzeug-Funktionalität über Funkschlüssel die relative Positionierung im Vergleich zu den Verkehrsteilnehmern wichtig. Hierzu kann beispielsweise GPS verwendet werden. Eine entsprechende Einrichtung 310 ist beispielsweise in dem Fahrzeug 305 dargestellt. Hiermit kann ein Empfang zu Satelliten dargestellt werden.

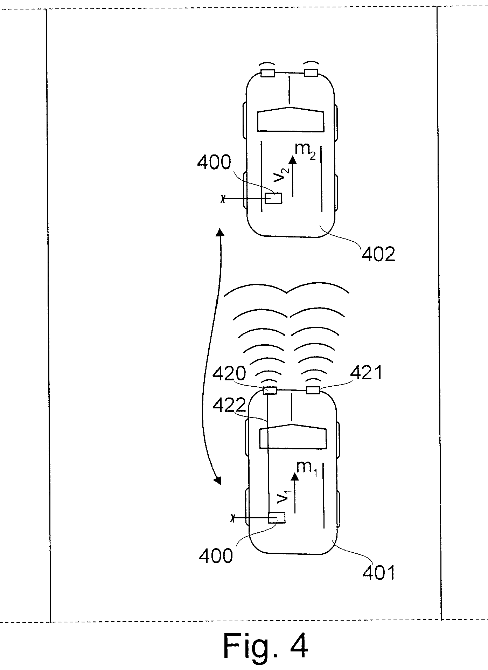

Fig. 4 zeigt zwei Fahrzeuge, die jeweils mit einer Kommunikationseinrichtung 400 bzw. einer Funkschlüsseleinrichtung ausgestattet sind. Das Fahrzeug 401 erkennt mittels Umfeldsensorik 420, 421 einen unvermeidbaren Crash mit dem Fahrzeug 402. Über die Verbindungsleitung 422 kann die Umfeldsensorik 420 Daten an die Kommunikationseinrichtung 400 weitergeben.

Das Fahrzeug 401 sendet mittels Funkschlüsseltechnologie die Information des bevorstehenden Zusammenstoßes und seine eigene Masse m₁ an das Fahrzeug 402. Dieses kann wiederum seine Masse m₂ zurücksenden. Mit dieser Information können dann beide Fahrzeuge ihre passiven Sicherheitssysteme besser konditionieren. Zusätzlich kann das Fahrzeug 401 einen möglichen Aufprallwinkel oder eine mögliche Aufprallgeschwindigkeit v₁ an das Fahrzeug 402 senden, um auch diese Information für ein passives Sicherheitssystem zu verwenden. Um den Abstand und Aufprallwinkel genau bestimmen zu können, können Technologien des Fahrzeuges 402 genutzt werden, wie z. B. Abstandsmessung mittels Feldstärkemessung, sowie einen digitalen Kompass, der die Fahrtrichtung ermittelt. So kann sehr genau festgestellt werden, wo sich das Fahrzeug 401 im Verhältnis zum Fahrzeug 402 befindet. Die Geschwindigkeiten v₁ und v₂ können somit in geeignete Programmelemente eines Programms einfließen und die Daten des bevorstehenden Unfalls weitergeleitet und ausgewertet werden. So kann festgestellt werden, ob durch das andere Fahrzeug Gefahr besteht.

Zusätzlich können auch Daten der Fahrbahn (ob nass oder vereist) von geeigneten Sensoren erfasst werden, um den Bremsweg mittels eines Computerprogramms auszurechnen und festzulegen, ob ein Zusammenstoß wirklich bevorsteht. Weiterhin könnten andere Fahrzeuge mit einbezogen werden, damit diese vor dem Unfall gewarnt werden können.

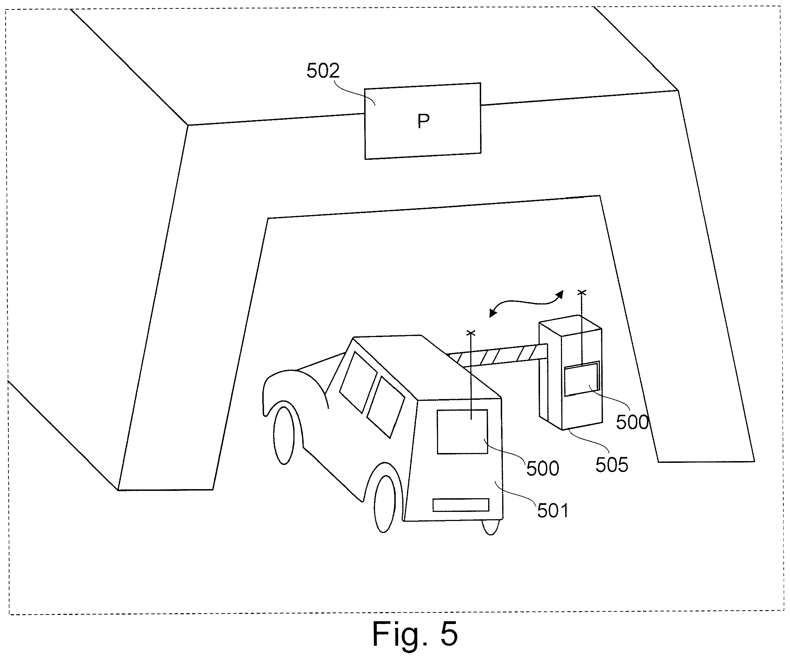

Fig. 5 stellt ein Fahrzeug 501 dar, das in ein Parkhaus 502 einfährt. Das Parkhaus 502 ist ausgestattet mit einer Funkschlüsseltechnologie. D. h., die Bezahlung des Parkhauses kann mittels Funkschlüsselkommunikation abgewickelt werden, wobei die Funkschlüsseleinrichtung 500 in die Einfahrtsschranke 505 des Parkhauses eingebaut ist. Das Fahrzeug 501 besitzt ebenfalls eine Funkschlüsseleinrichtung 500, welche mit der Funkschlüsseleinrichtung 500 des Parkhausschrankensystems 505 kommunizieren kann, um die Zahlung drahtlos durchführen zu können. Das Parkhaus 502 funktioniert dabei ähnlich wie bei Mautsystemen. Bezahldienste an anderen Stellen, wie z. B. Brücken, können auf diese Weise auch möglich gemacht werden.

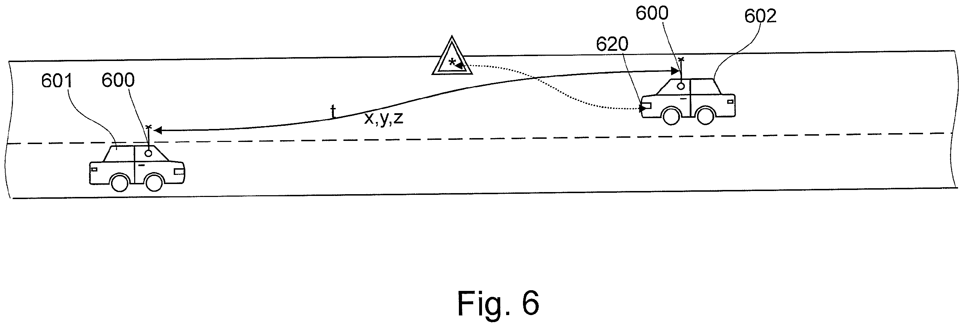

Fig. 6 zeigt zwei Fahrzeuge 601 und 602, die ausgerüstet sind mit Funkschlüsseleinrichtungen 600. Diese können Informationen über den Straßenzustand weitergeben, wie z. B. Nässe oder Eisglätte (symbolisiert durch Strassenglätte-Warndreieck) die mittels Sensorik 620 erfasst werden kann(gepunkteter Pfeil). Durch eine Funkschlüsseleinrichtung 600 kann diese Information zur Warnung an Fahrzeug 601 inklusive Zeitstempel (t) und Position (x; y; z) weitergegeben werden (siehe Doppelpfeil). Diese Hinweise können gegebenenfalls an andere Verkehrsteilnehmer mittels Store-and-Forward-Information weitergeleitet werden.

Weiterhin können Identifikationskennungen mittels der Funkschlüsseltechnologie weitergegeben werden. So können z. B. Einsatzfahrzeuge andere Informationen verschlüsselt erhalten als normale Verkehrsteilnehmer. Mit Hilfe der Funktechnologie mittels Funkschlüssel können auch Informationen von fest installierten Punkten an die Verkehrsteilnehmer weitergegeben werden, so z. B. Informationen von Schilderbrücken. So können die Verkehrsteilnehmer frühzeitig vor Staus oder anderen unvorhergesehenen Ereignissen, wie starke Regenschauer, gewarnt werden.

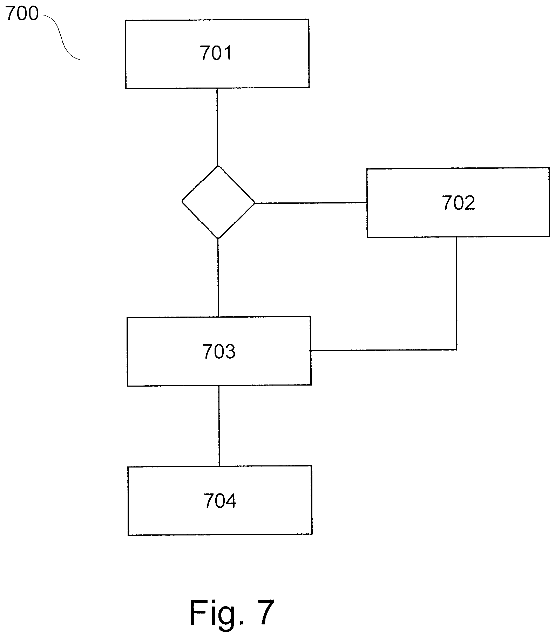

Fig. 7 zeigt ein Verfahren zur Fahrzeug-zu-X-Kommunikation mit einer Funkschlüsseleinrichtung mit den folgenden Schritten: In dem ersten Verfahrensschritt ist der Funkschlüssel bereit Daten zur drahtlosen Fahrberechtigung zu empfangen. Diese Daten können von einem tragbaren Modul einer schlüssellosen Fahrberechtigung gesendet werden.

Wenn ein weiteres Fahrzeug oder Infrastruktureinheit vorhanden ist mit derselben Kommunikationstechnologie in Reichweite des Funkschlüssel, kann Verfahrensschritt 702 ausgeführt werden, nämlich Fahrzeug-zu-X Kommunikationsdaten von einem anderen Sender zu empfangen.

Die empfangenen Daten oder im Speicher befindliche Daten können im Verfahrensschritt 703 gesendet werden. Daten können natürlich auch gesendet werden, wenn zuvor keine Kommunikation bzw. Empfang mit einem anderen Fahrzeug oder Infrastruktureinheit stattfand. Als letzten Verfahrensschritt 704 können die Daten für eine Store-and-Forward Funktion gespeichert werden.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Kommunikationsvorrichtung (100) zur Funkschlüssel-Fahrzeug-zu-X-Kommunikation für ein Fahrzeug (201), die Kommunikationsvorrichtung aufweisend:
eine Funkschlüsseleinrichtung, RKE,(100) mit
einem Fahrzeugmodul und
einem tragbaren Modul;
wobei das Fahrzeugmodul und/oder das tragbare Modul einen Transceiver aufweist, der zum drahtlosen Empfangen und Senden von Fahrzeug-zu-X-Kommunikationsdaten an ein weiteres Fahrzeug (202) oder eine Infrastruktur ausgeführt ist;
wobei eine Anpassung einer Schlüssellos-Software über das tragbare Modul und/ oder eine direkte Funkkommunikation zum Fahrzeugmodul ausführbar ist.

2. Kommunikationsvorrichtung nach Anspruch 1, ferner aufweisend:
eine Schnittstelle zu einer Positionsbestimmungseinheit zum Erstellen von Positionsdaten eines Fahrzeuges.

3. Kommunikationsvorrichtung nach Anspruch 1 oder 2
wobei die Fahrzeug-zu-X-Kommunikationsdaten ausgewählt sind aus einer Gruppe bestehend aus:
Positionsdaten;
Zeitstempel;
Umfelddaten;
Warnsignale;
Kennungsdaten;
Geschwindigkeitsdaten;
Richtungsdaten; und
weitere Informationsdaten.

4. Kommunikationsvorrichtung nach Anspruch 2 oder 3,
wobei das Fahrzeug (201) ein Einsatzfahrzeug ist, das nach Auffinden einer Unfallstelle seine Positionsdaten als Ortungssignal über die Kommunikationsvorrichtung an weitere Einsatzfahrzeuge zur Koordination des Einsatzes sendet.

5. Kommunikationsvorrichtung nach einem der vorhergehenden Ansprüche,
wobei mindestens ein Fahrzeug (201, 202) ferner aufweist:
eine Anzeigevorrichtung die ausgelegt ist, um Fahrzeug-zu-X-Kommunikationsdaten zu empfangen und anzuzeigen.

6. Kommunikationsvorrichtung nach Anspruch 4 oder 5, ferner aufweisend
ein fahrzeugseitiges Navigationssystem, das ausgelegt ist, das Ortungssignal zu empfangen und auf einer digitalen Karte eine Zielführung auf der Anzeigevorrichtung anzuzeigen.

7. Kommunikationsvorrichtung nach einem der vorhergehenden Ansprüche,
wobei die Fahrzeug-zu-X-Kommunikationsdaten zusätzlich auch auf Basis einer weiteren Kommunikationstechnik mit einer höheren Bandbreite vom Transceiver auf Basis eines Standardformats empfangbar und aussendbar sind;
wobei die weitere Kommunikationstechnik ausgewählt ist aus einer Gruppe bestehend aus:
WLAN-Technik basierend auf IEEE 802.11 Standards;
Zellulärer Funk basierend auf GSM, UMTS, LTE, Wimax; und
Kommunikationstechnik basierend auf DSRC.

8. Kommunikationsvorrichtung nach Anspruch 7,
wobei die Fahrzeug-zu-X-Kommunikationsdaten eine Kennung umfassen, die anzeigt, welche weitere Kommunikationstechnik in einem Sender integriert ist.

9. Kommunikationsvorrichtung nach einem der vorhergehenden Ansprüche, weiterhin aufweisend
eine Speichereinheit zur Bereitstellung von Fahrzeug-zu-X-Kommunikationsdaten.

10. Kommunikationsvorrichtung nach einem der vorhergehenden Ansprüche, ferner aufweisend:
einen Mikroprozessor zur Verarbeitung der Fahrzeug-zu-X-Kommunikationsdaten und zum Ausführen von Kommunikations-Stacks;
wobei die Fahrzeug-zu-X-Kommunikationsdaten ein Standardformat eines intelligenten Transportsystems, ITS, aufweisen.

11. Kommunikationsvorrichtung nach einem der vorhergehenden Ansprüche,
wobei die Schlüssellos-Fahrberechtigung ein Midrange oder Longrange Frontend aufweist.

12. Fahrzeug mit einer Kommunikationsvorrichtung nach einem der Ansprüche 1 bis 11.

13. Verfahren zur Funkschlüssel-Fahrzeug-zu-X-Kommunikation mit einer Funkschlüsseleinrichtung, das Verfahren aufweisend:
Empfangen von Fahrberechtigungsdaten von einem tragbaren Modul einer schlüssellosen Fahrberechtigung; und
Empfangen und Senden von Fahrzeug-zu-X-Kommunikationsdaten durch einen Transceiver der Funkschlüsseleinrichtung;
wobei eine Anpassung der Schlüssellos Software über das tragbare Modul und/ oder eine direkte Funkkommunikation zum Fahrzeugmodul ausgeführt wird.

14. Programmelement, das wenn es auf einem Mikroprozessor einer Kommunikationsvorrichtung ausgeführt wird, den Mikroprozessor anleitet, die Verfahrensschritte nach Anspruch 13 auszuführen.

15. Computerlesbares Medium, auf dem ein Programmelement gespeichert ist, das, wenn es auf einem Mikroprozessor einer Kommunikationsvorrichtung ausgeführt wird die Kommunikationsvorrichtung anleitet die Verfahrensschritte nach Anspruch 13 durchzuführen.

## Claims

1. Communication apparatus (100) for radio key vehicle-to-X communication for a vehicle (201), said communication apparatus having:
a radio key device, RKE, (100) having
a vehicle module and
a portable module;
wherein the vehicle module and/or the portable module has/have a transceiver which is designed for wirelessly receiving and sending vehicle-to-X communication data to a further vehicle (202) or an infrastructure;
wherein customization of a piece of keyless software can be executed by means of the portable module and/or direct radio communication to the vehicle module.

2. Communication apparatus according to Claim 1, also having:
an interface to a position-finding unit for creating position data for a vehicle.

3. Communication apparatus according to Claim 1 or 2, wherein the vehicle-to-X communication data are selected from a group comprising:
position data;
time stamps;
surroundings data;
warning signals;
identifier data;
speed data;
direction data; and
further information data.

4. Communication apparatus according to Claim 2 or 3, wherein the vehicle (201) is an emergency vehicle which, after finding an accident scene, sends its position data as a locating signal via the communication apparatus to further emergency vehicles for the purpose of coordinating the operation.

5. Communication apparatus according to one of the preceding claims,
wherein at least one vehicle (201, 202) also has:
a display apparatus which is designed to receive and display vehicle-to-X communication data.

6. Communication apparatus according to Claim 4 or 5, also having
a vehicle-based navigation system which is designed to receive the locating signal and to display destination guidance on a digital map on the display apparatus.

7. Communication apparatus according to one of the preceding claims,
wherein the vehicle-to-X communication data can additionally also be received and transmitted on the basis of further communication technique with a higher bandwidth from the transceiver on the basis of a standard format;
wherein the further communication technique is selected from a group comprising:
WLAN engineering based on IEEE 802.11 standards;
cellular radio based on GSM, UMTS, LTE, Wimax; and
communication technique based on DSRC.

8. Communication apparatus according to Claim 7,
wherein the vehicle-to-X communication data comprise an identifier which indicates what further communication technique is integrated in a transmitter.

9. Communication apparatus according to one of the preceding claims, also having
a memory unit for providing vehicle-to-X communication data.

10. Communication apparatus according to one of the preceding claims, also having:
a microprocessor for processing the vehicle-to-X communication data and for executing communication stacks;
wherein the vehicle-to-X communication data have a standard format for an intelligent transportation system, ITS.

11. Communication apparatus according to one of the preceding claims,
wherein the keyless driving authorization has a mid-range or long-range front end.

12. Vehicle having a communication apparatus according to one of Claims 1 to 11.

13. Method for radio key vehicle-to-X communication with a radio key device, said method involving:
reception of driving authorization data from a portable module associated with keyless driving authorization; and
reception and transmission of vehicle-to-X communication data by a transceiver in the radio key device;
wherein customization of the keyless software is executed by means of the portable module and/or direct radio communication to the vehicle module.

14. Program element which, when executed on a microprocessor in a communication apparatus, instructs the microprocessor to perform the method steps according to Claim 14.

15. Computer-readable medium which stores a program element which, when executed on a microprocessor in a communication apparatus, instructs the communication apparatus to perform the method steps according to Claim 13.

## Revendications

1. Dispositif de communication (100) pour la communication entre véhicule et X par clé radio destiné à un véhicule (201), le dispositif de communication comportant :
un dispositif de clé radio, RKE, (100) comportant un module de véhicule et
un module portatif ;
dans lequel le module de véhicule et/ou le module portatif comporte un émetteur-récepteur qui est conçu pour recevoir et émettre sans fil des données de communication entre véhicule et X vers un autre véhicule (202) ou vers une infrastructure ;
dans lequel une adaptation d'un logiciel sans clé par l'intermédiaire du module portatif et/ou une communication radio directe avec le module de véhicule peut être effectuée.

2. Dispositif de communication selon la revendication 1, comportant en outre :
une interface avec une unité de détermination de position destinée à établir des données de position d'un véhicule.

3. Dispositif de communication selon la revendication 1 ou 2,
dans lequel les données de communication entre véhicule et X sont sélectionnées à partir d'un groupe comprenant :
des données de position ;
un marqueur temporel ;
des données d'environnement ;
des signaux d'alarme ;
des données d'identification ;
des données de vitesse ;
des données de direction ; et
d'autres données d'information.

4. Dispositif de communication selon la revendication 2 ou 3,
dans lequel le véhicule (201) est un véhicule d'intervention qui, après avoir repéré le lieu d'un accident, émet ses données de position en tant que signal de localisation par l'intermédiaire du dispositif de communication vers d'autres véhicules d'intervention pour coordonner l'intervention.

5. Dispositif de communication selon l'une quelconque des revendications précédentes,
dans lequel au moins un véhicule (201, 202) comporte en outre :
un dispositif d'affichage qui est conçu pour recevoir et afficher des données de communication entre véhicule et X.

6. Dispositif de communication selon la revendication 4 ou 5, comportant en outre un système de navigation côté véhicule qui est conçu pour recevoir le signal de localisation et pour afficher sur le dispositif d'affichage un guidage sur une carte numérique.

7. Dispositif de communication selon l'une quelconque des revendications précédentes,
dans lequel les données de communication entre véhicule et X peuvent en outre être également reçues et émises sur la base d'un format normalisé par l'émetteur-récepteur sur la base d'une autre technique de communication ayant une plus grande largeur de bande ;
dans lequel l'autre technique de communication est sélectionnée dans un groupe comprenant :
la technique WLAN basée sur la norme IEEE 802.11 ;
un système radio cellulaire basé sur le GSM, l'UMTS, le LTE, le Wimax ; et
une technique de communication basée sur la norme DSRC.

8. Dispositif de communication selon la revendication 7,
dans lequel les données de communication entre véhicule et X comprennent une identification qui indique quelle autre technique de communication est intégrée à un émetteur.

9. Dispositif de communication selon l'une quelconque des revendications précédentes, comportant en outre une unité de mémoire destinée à fournir les données de communication entre véhicule et X.

10. Dispositif de communication selon l'une quelconque des revendications précédentes, comportant en outre :
un microprocesseur destiné au traitement des données de communication entre véhicule et X et à l'exécution de la pile de communication ;
dans lequel les données de communication entre véhicule et X présentent un format normalisé d'un système de transport intelligent, ITS.

11. Dispositif de communication selon l'une quelconque des revendications précédentes,
dans lequel le système d'autorisation de conduire sans clé comporte un frontal à moyenne portée ou à grande portée.

12. Véhicule comportant un dispositif de communication selon l'une quelconque des revendications 1 à 11.

13. Procédé de communication entre véhicule et X par clé radio comportant un dispositif de clé radio, le procédé consistant à :
recevoir des données d'autorisation de conduire en provenance d'un module portatif d'un système d'autorisation de conduite sans clé ; et
recevoir et émettre les données de communication entre véhicule et X au moyen d'un émetteur-récepteur du dispositif de clé radio ;
dans lequel une adaptation du logiciel sans clé par l'intermédiaire du module portatif et/ou une communication radio directe avec le module de véhicule est effectuée.

14. Élément de programme qui, lorsqu'il est exécuté sur un microprocesseur d'un dispositif de communication, amène le microprocesseur à effectuer les étapes de procédé selon la revendication 13.

15. Support lisible par ordinateur, sur lequel est stocké un élément de programme, qui, lorsqu'il est exécuté sur un microprocesseur d'un dispositif de communication amène le dispositif de communication à effectuer les étapes de procédé selon la revendication 13.
